Europäisches Patentamt

European Patent Office

Office européen des brevets

(19)

(11) Veröffentlichungsnummer : **0 313 916 B1**

# (12) EUROPÄISCHE PATENTSCHRIFT

(45) Veröffentlichungstag der Patentschrift :
13.03.91 Patentblatt 91/11

(51) Int. Cl.$^5$ : **B29C 67/22, B29C 45/27,
B29C 45/38, // B29K105:04**

(21) Anmeldenummer : 88116883.5

(22) Anmeldetag : 12.10.88

(54) **Vorrichtung zum Herstellen von Formteilen aus einem zu Kunststoff, insbesondere Schaumkunststoff, ausreagierenden, fliessfähigen Reaktionsgemisch aus fliessfähigen Reaktionskomponenten.**

(30) Priorität : 24.10.87 DE 3736022

(43) Veröffentlichungstag der Anmeldung :
03.05.89 Patentblatt 89/18

(45) Bekanntmachung des Hinweises auf die
Patenterteilung :
13.03.91 Patentblatt 91/11

(84) Benannte Vertragsstaaten :
DE FR GB IT

(56) Entgegenhaltungen :
EP-A- 0 187 360
DE-A- 2 103 451
DE-A- 2 346 348

(73) Patentinhaber : MASCHINENFABRIK
HENNECKE GMBH
Postfach 1180
W-5204 St. Augustin 1 (DE)

(72) Erfinder : Proksa, Ferdinand, Dr.
Am Arenzberg 9
W-5090 Leverkusen 31 (DE)
Erfinder : Sulzbach, Hans-Michael
Hermann-Loens-Strasse 12
W-5330 Koenigswinter 21 (DE)
Erfinder : Althausen, Ferdinand
Wiescheider Strasse 16
W-5206 Neunkirchen 1 (DE)
Erfinder : Raffel, Reiner
Mueschbungert 2
W-5200 Siegburg (DE)

(74) Vertreter : Müller, Heinz-Gerd, Dipl.-Ing. et al
BAYER AG Konzernverwaltung RP
Patentabteilung
W-5090 Leverkusen 1, Bayerwerk (DE)

## Beschreibung

Die Erfindung betrifft eine Vorrichtung zum Herstellen von Formteilen aus einem zu Kunststoff, insbesondere Schaumkunststoff, ausreagierenden, fließfähigen Reaktionsgemisch aus fließfähigen Reaktionskomponenten, bestehend aus einem Formwerkzeug mit Mischkopf, wobei an die Auslaßöffnung des Mischkopfes ein zum Formhohlraum führender Angußkanal anschließt, dem ein Einsatzstück zugeordnet ist, das mindestens teilweise die Wandung des Angußkanals bildet. (wie aus EP-A2-187360 bekannt).

Zum Herstellen von Kunststoff-Formteilen bzw. Schaumkunststoff-Formteilen aus einem fließfähigen Reaktionsgemisch, welches beispielsweise Polyurethan-Schaumstoff bildet, bedient man sich eines Formwerkzeuges mit angebautem oder für die Zeit des Gemischeintrages ansetzbarem Mischkopf. Hierfür werden meist wegen ihrer selbstreinigung Ausstoßkolben-Mischköpfe verwendet, aber auch andere Mischkopftypen. Gleichgültig, welchen Mischkopftyp man verwendet, entsteht bei Vorhandensein des in den meisten Fällen notwendigen Angußkanals zwischen der Auslaßöffnung des Mischkopfes und dem Formhohlraum eine Verschmutzung dieses Angußkanals durch den letzten Rest des Reaktionsgemisches, welcher unvermischte oder nur schlecht vermischte Komponentenanteile enthält. Diese Verschmutzungen erfordern eine Reinigung, um eine störungsfreie Herstellung einwandfreier Formteile zu gewährleisten. Für die Reinigung bedient man sich einer Preßluftpistole oder verwendet Lösungsmittel. Durch beide Maßnahmen wird die Umgebung belastet. Durch die erforderliche Reinigung wird die Zykluszeit für die Formteilherstellung unnötig verlängert. Diese Verlustzeiten summieren sich im Laufe einer Arbeitsschicht zu einem beachtlichen Kostenfaktor.

Es besteht die Aufgabe, eine Vorrichtung der eingangs genannten Art zu schaffen, bei welcher eine Verschmutzung des Angußkanals durch unvermischte oder schlecht vermischte Komponentenanteile vermieden wird, so daß durch Fortfall der Reinigungszeit die Zykluszeit bei der Herstellung des Formteils verkürzt wird.

Gelöst wird diese Aufgabe dadurch, daß das Einsatzstück aus einer paßgenau in die Formwerkzeughälften bzw. in darin angeordnete Angußplatten einsetzbaren und mit dem ausgehärteten Anguß entformbaren Auskleidung besteht.

Dadurch wird erreicht, daß in den kritischen Bereichen des Angußkanals, das ist in der Regel der unmittelbar an die Auslaßöffnung der Mischkammer anschließende Abschnitt, der letzte Rest des Reaktionsgemisches nur mit der Innenfläche des Durchströmkanals der Auskleidung in Berührung kommt, dort verbleibt und mit dem Anguß zusammen entformbar ist. Auf diese Weise kann keine störende Verschmutzung des Angußkanals auftreten. Es versteht sich, daß die Auskleidung eine gewisse Steifigkeit besitzen muß, d.h. sie muß im wesentlichen formstabil bleiben. Verläuft die Trennebene durch den Angußkanal so läßt sich die Auskleidung flach einlegen. Anderenfalls muß sie axial eingesetzt werden, wobei das Formwerkzeug auch in dieser Richtung öffnen muß, damit der Anguß mit entformt werden kann.

Sicherlich ist eine solche, nur einmal benutzbare Auskleidung ein Kostenfaktor. Versuche und Nachkalkulationen haben jedoch gezeigt, daß die durch die besagten Verschmutzungen bedingten Kosten (Produktionsausfall Reinigungsmittel sowie Reinigungszeit) trotz Verwendung der Auskleidung um etwa die Hälfte verringert werden konnten.

Es lag nicht auf der Hand, daß an dieser kritischen Stelle die Auskleidung den beabsichtigten Zweck erfüllen würde, denn man mußte eine Hinterspülung der Auskleidung befürchten, was gerade das Gegenteil des angestrebten Effektes bewirkt hätte.

Vorzugsweise ist der Durchströmkanal der Auskleidung strömungsberuhigend ausgebildet.

Diese Maßnahme ist für den Angußkanal herkömmlicher Art an sich bekannt, sie läßt sich aber in besonders vorteilhafter Weise auch auf den einen Teil des Angußkanals darstellenden Durchströmkanal der Auskleidung übertragen.

Gemäß einer weiteren besonderen Ausführungsform weist der Durchströmkanal mindestens eine Drosselstelle auf.

Dadurch läßt sich ein gewünschter Mischkammerdruck einstellen.

Diese beiden besonderen Ausführungsformen sind in Kombination mit einer weiteren besonderen Ausführungsform vorteilhaft:

Für die Auskleidung ist eine Ausnehmung vorgesehen, auf welche die äußere Geometrie von Auskleidungen mit unterschiedlicher Geometrie ihres Durchströmkanals abgestimmt ist.

D.h., möchte man mit der Vorrichtung wechselweise verschiedene chemische Rezepturen verarbeiten, die unterschiedliche Fließeigenschaften, Vermischungseigenschaften usw. des Reaktionsgemisches verursachen, so lassen sich durch die Standardisierung der äußeren Geometrie der Auskleidung Auskleidungen mit entsprechend den jeweiligen Erfordernissen optimierter Geometrie des Durchströmkanals verwenden.

Vorzugsweise sind die Auslaßöffnung des Mischkopfes und die Einlaßöffnung der Auskleidung mit korrespondierenden, abdichtenden Zentrieransätzen versehen.

Auf diese Weise wird sichergestellt, daß das Reaktionsgemisch die Auskleidung nicht hinterspült.

Insbesondere bei Formschäumanlagen ist es vorteilhaft, eine automatische Zuführ- und Einsetzeinrichtung für die Auskleidung vorzusehen.

Dies läßt sich z.B. durch Anordnung einer entsprechenden Station bei Formschäumanlagen recht einfach bewerkstelligen. Hierfür eignen sich marktübliche Einrichtungen, mit welchen entsprechende Gegenstände erforderlichenfalls gewendet, ausgerichtet und taktweise abgegeben werden können.

Die Auskleidung kann aus jedem geeigneten Werkstoff bestehen, welcher die geringe erforderliche Festigkeit besitzt.

Kunststoff, insbesondere Abfallkunststoff, bietet sich besonders an.

Die Herstellung im Spritzgießverfahren bedeutet keinerlei Schwierigkeit. Ist die Geometrie des Durchströmkanals kompliziert, so daß das teil schlecht entformbar wäre, stellt man zwei Halbschalen im Spritzgießverfahren her und verschweißt oder verklebt sie miteinander.

In der Zeichnung ist die neue Vorrichtung anhand von vier Ausführungsbeispielen rein schematisch dargestellt und nachstehend näher erläutert. Es zeigen :

Fig. 1 einen Schnitt durch die Vorrichtung gemäß einem ersten Ausführungsbeispiel,

Fig. 2 einen Schnitt durch die Vorrichtung gemäß einem zweiten Ausführungsbeispiel,

Fig. 3 einen Schnitt durch die Vorrichtung gemäß einem dritten Ausführungsbeispiel und

Fig. 4 eine Formschäumanlage in der Draufsicht.

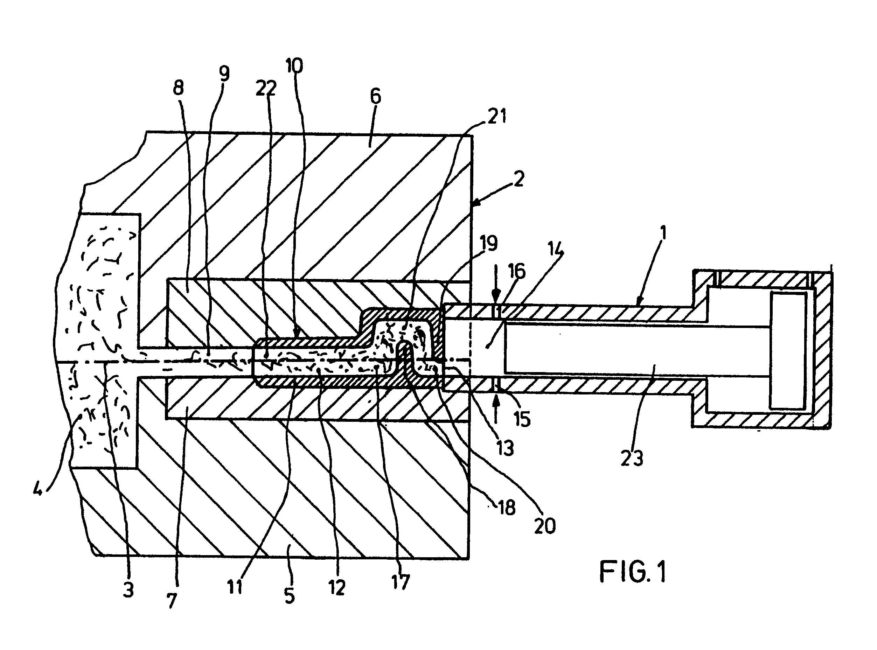

In Fig. 1 besteht die Vorrichtung aus einem AusstoßkolbenMischkopf 1 und einem Formwerkzeug 2, welches wiederum aus zwei durch eine strichpunktiert dargestellte Trennebene 3 getrennten, einen Formhohlraum 4 einschließenden Formwerkzeughälften 5, 6 besteht.

Die Trennebene 3 tangierend, sind Angußplatten 7, 8 angeordnet, welche zwischen sich einen Angußkanal 9 einschließen. Sie bilden zusammen eine Ausnehmung 10, in welcher paßgenau eine Auskleidung 11 aus Abfall-Polypropylen angeordnet ist. Diese ist bei geöffnetem Formwerkzeug 2 einlegbar und mit dem hergestellten Formteil – samt Angußstange 12 – entformbar. Die Auskleidung 11 schließt unmittelbar an die Auslaßöffnung 13 der Mischkammer 14 des Mischkopfes 1 an. In die Mischkammer 14 münden Einspritzöffnungen 15, 16 für die Reaktionskomponenten. Der Durchströmkanal 17 der Auskleidung 11, welcher einen Teil des Angußkanals 9 darstellt, weist zwei durch zwei Vorsprünge 18, 19 gebildete Drosselstellen 20, 21 auf. Der stromabwärts liegende Abschnitt erweitert sich im Querschnitt von Umlenkung zu Umlenkung und ist damit strömungsberuhigend ausgebildet. Da der Ausstoßkolben 23 bis zur Auslaßöffnung 13 vorschiebbar ist (zur Demonstration der Mischkammer 14 ist er jedoch in Mischstellung gezeigt), ist das gesamte Misch- und Angußsystem nach dem Entformen frei von Verschmutzungen.

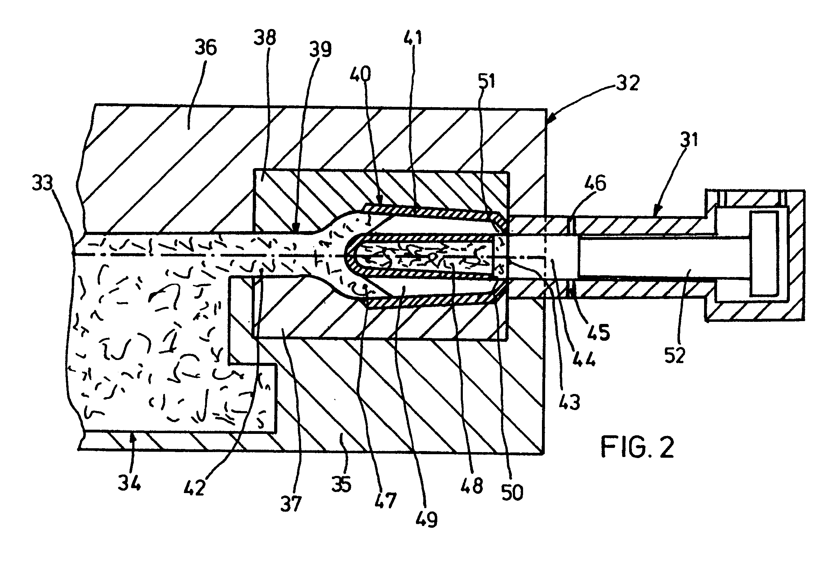

In Fig. 2 besteht die Vorrichtung aus einem AusstoßkolbenMischkopf 31 und einem Formwerkzeug 32, welches wiederum aus zwei durch eine strichpunktiert eingezeichnete Trennebene 33 getrennten, einen Formhohlraum 34 einschließenden Formwerkzeughälften 35, 36 besteht. Die Ebene 33 tangierend, sind Angußplatten 37, 38 angeordnet, welche zwischen sich einen Angußkanal 39 einschließen. Sie bilden zusammen eine Ausnehmung 40, in welcher paßgenau eine Auskleidung 41 aus Kunststoff angeordnet ist. Diese ist bei geöffnetem Formwerkzeug 32 einlegbar und mit dem herstellten Formteil – samt Angußstange 42 – entformbar. Die Auskleidung 40 schließt unmittelbar an die Auslaßöffnung 43 der Mischkammer 44 des Mischkopfes 31 an. In die Mischkammer 44 münden Einspritzöffnungen 45, 46 für die Reaktionskomponenten. Der Durchströmkanal 47 der Auskleidung 40 stellt einen Teil des Angußkanals 39 dar und weist eine zentrale Auffangkammer 48 auf, welche über Rippen 49 mit der eigentlichen Auskleidung 40 verbunden ist. Der zwischen dem oberen Rand 50 der Auffangkammer 48 und der Auskleidung 41 gebildete Überströmspalt stellt eine Drosselstelle 51 dar. Die diffusorartige Querschnittszunahme des Strömungskanals 47 dient der Strömungsberuhigung. Der Ausstoßkolben 52 ist bis zur Auslaßöffnung 43 vorschiebbar (er ist hier zur Veranschaulichung der Mischkammer 44 in Mischstellung dargestellt), so daß nach dem Entformen das gesamte Misch- und Angußsystem frei von Verschmutzungen ist.

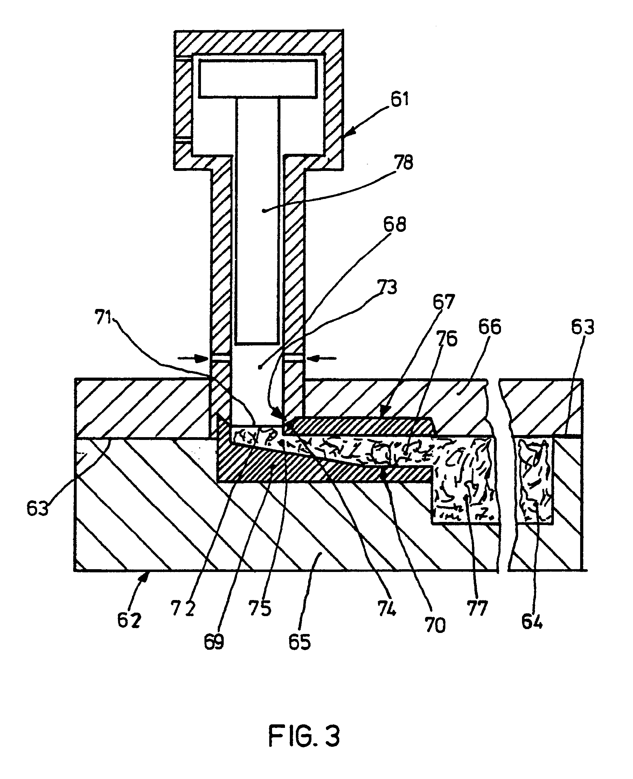

In Fig. 3 besteht die Vorrichtung aus einem AusstoßkolbenMischkopf 61 und einem Formwerkzeug 62, welches wiederum aus zwei durch eine Trennebene 63 getrennten, einen Formhohlraum 64 einschließenden Formwerkzeughälften 65, 66 besteht. In diese ist eine Ausnehmung 67 eingelassen, welche von der Trennebene 63 durchzogen ist. In der Ausnehmung 67 ist quer zur Mischkammer 68 des Mischkopfes 61 eine Auskleidung 69, welche einen Angußkanal 70 aufweist, eingepaßt. Sie ist im Spritzgießverfahren aus Kunststoff hergestellt worden. Diese Auskleidung 69 ist bei geöffnetem Formwerkzeug 61 in die Ausnehmung 67 einlegbar und schließt an die Auslaßöffnung 71 der Mischkammer 68 an. Hierzu sind die Auslaßöffnung 71 außen und die Einlaßöffnung 72 der Auskleidung 69 innen mit Zentrieransatz flächen 73, 74 versehen, welche gegeneinander abdichtend wirken. Der Angußkanal 70 erweitert sich hinter einer Drosselstelle 75 und trägt somit zur Beruhigung der Strömung bei. Die Auskleidung 69 ist – zusammen mit dem darin befindlichen, ausgehärteten Anguß 76 und dem Formteil 77– entformbar. Der Ausstoßkolben 78 (welcher lediglich zur Veranschaulichung der Mischkammer 69 in Mischstellung dargestellt ist) ist bis an die Auslaßöffnung 71 vorschiebbar, so daß das gesamte Misch- und Angußsystem nach dem Entformen des Formteils frei von Verschmutzungen ist.

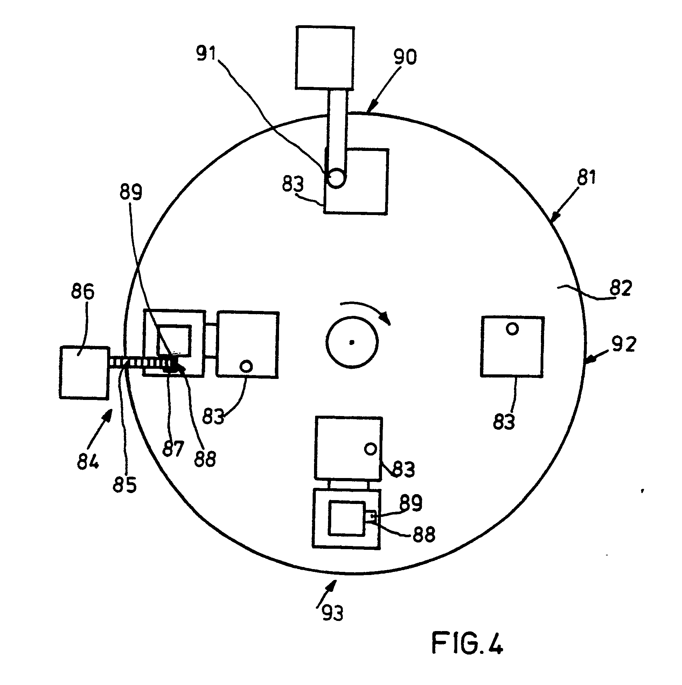

In Fig. 4 besteht die Formschäumanlage 81 aus einem Rundtisch 82, auf welche vier Formwerkzeuge 83 angeordnet sind. Diese werden bei taktweiser Drehung des Rundtisches 82 an verschiedenen Stationen vorbeigeführt, und zwar: An der Station 84 wird bei geöffnetem Formwerkzeug 83 mittels einer Zuführ- und Einsetzeinrichtung 85 aus einem Magazin 86 jeweils eine Auskleidung 87 entnommen und in eine Ausnehmung 88 eines Angußkanals 89 eingesetzt. An der nächsten Station 90 wird das Formwerkzeug 83 geschlossen, ein Mischkopf 91 angesetzt und das Reaktionsgemisch erzeugt und in das Formwerkzeug 83 eingefüllt. In der Station 92 erfolgt bei geschlossenem Formwerkzeug 83 das Aushärten. Die Station 93 dient zum Öffnen des Formwerkzeuges 83 und Entnehmen des Formteils - samt damit verbundener Angußstange und Auskleidung. Sodann beginnt der Zyklus von neuem.

## Ansprüche

1. Vorrichtung zum Herstellen von Formteilen aus einem zu Kunststoff, insbesondere Schaumkunststoff, ausreagierenden, fließfähigen Reaktionsgemisch aus fließfähigen Reaktionskomponenten, bestehend aus einem Formwerkzeug (2, 32, 62, 83) mit Mischkopf (1, 31, 61, 91), wobei an die Auslaßöffnung (13, 43, 71) des Mischkopfes (1, 31, 61, 91) ein zum Formhohlraum (4, 34, 64) führender Angußkanal (9, 39, 70, 89) anschließt, dem ein Einsatzstück (11, 41, 69, 87) zugeordnet ist, das mindestens teilweise die Wandung des Angußkanals (9, 39, 70, 89) bildet, dadurch gekennzeichnet, daß das Einsatzstück (11, 41, 69, 81) aus einer paßgenau in die Formwerkzeughälften (65 ; 66) bzw. in darin angeordnete Angußplatten (7 ; 8, 37 ; 38) einsetzbaren und mit dem ausgehärteten Anguß (12, 42, 76) entformbaren Auskleidung (11, 41, 69, 87) besteht.

2. Vorrichtung nach Anspruch 1, dadurch gekennzeichnet, daß der Durchströmkanal (17, 47, 70) der Auskleidung (11, 41, 69) strömungsberuhigend ausgebildet ist.

3. Vorrichtung nach Anspruch 1 oder 2, dadurch gekennzeichnet, daß der Durchströmkanal (17, 47, 70) der Auskleidung (11, 41, 69) mindestens eine Drosselstelle (20, 21, 51, 75) aufweist.

4. Vorrichtung nach einem der Ansprüche 1 bis 3, dadurch gekennzeichnet, daß für die Auskleidung (11, 41, 69, 87) eine Ausnehmung (10, 40, 67, 88) vorgesehen ist, auf welche die äußere Geometrie von Auskleidungen (11, 41, 69, 87) mit unterschiedlicher Geometrie des Durchströmkanals (17, 47, 70) abgestimmt ist.

5. Vorrichtung nach einem der Ansprüche 1 bis 4, dadurch gekennzeichnet, daß die Auskleidung (11, 41, 69, 87) aus Abfallkunststoff besteht.

6. Vorrichtung nach einem der Ansprüche 1 bis 5, dadurch gekennzeichnet, daß die Auslaßöffnung (79) des Mischkopfes (61) und die Einlaßöffnung (72) der Auskleidung (69) mit korrespondierenden, abdichtenden Zentrieransätzen (73, 74) versehen sind.

7. Vorrichtung nach einem der Ansprüche 1 bis 5, gekennzeichnet durch eine automatische Zuführ- und Einsetzeinrichtung (85) für die Auskleidung (87).

## Claims

1. A device for producing mouldings from a flowable reaction mixture of flowable reaction components which reacts to form plastics material, more particularly foamed plastics material, comprising a moulding tool (2, 32, 62, 83) with a mixer head (1, 31, 61, 91), the outlet opening (13, 43, 71) of the mixer head (1, 31, 61, 91) adjoining a runner (9, 39, 70, 89) which leads to the mould cavity (4, 34, 64) and with which an insert (11, 41, 69, 81) is associated, which at least partially forms the wall of the runner (9, 39, 70, 89), characterised in that the insert (11, 41, 69, 81) is formed by a lining (11, 41, 69, 87), which can be fitted snugly in the moulding tool halves (65 ; 66) or the runner plates (7 ; 8, 37 ; 38) arranged therein and can be removed from the mould together with the hardened slug (12, 42, 76).

2. A device according to claim 1, characterised in that the through passage (17, 47, 70) of the lining (11, 41, 69) is designed so as to calm the flow.

3. A device according to claim 1 or 2, characterised in that the through passage (17, 47, 70) of the lining (11, 41, 69) comprises at least one throttling point (20, 21, 51, 75).

4. A device according to one of claims 1 to 3, characterised in that a recess (10, 40, 67, 88) is provided for the lining (11, 41, 69, 87), to which recess is adapted the external geometry of linings (11, 41, 69, 87) having different geometries of their through passage (17, 47, 70).

5. A device according to one of claims 1 to 4, characterised in that the lining (11, 41, 69, 87) is made of waste plastics material.

6. A device according to one of claims 1 to 5, characterised in that the outlet opening (79) of the mixer head (61) and the inlet opening (72) of the lining (69) are provided with corresponding, sealing centring shoulders (73, 74).

7. A device according to one of claims 1 to 5, characterised by an automatic supply and insertion device (85) for the lining (87).

## Revendications

1. Appareil pour fabriquer des pièces moulées à partir d'un mélange de réaction, coulant, réagissant pour donner un plastique, en particulier un plastique mousse et constitué de composants de la réaction coulants, appareil constitué d'un outil de moulage (2, 32, 62, 83) comportant une tête mélangeuse (1, 31, 61, 91), étant précisé qu'à l'ouverture de sortie (13, 43, 71) de la tête mélangeuse (1, 31, 61, 91) se raccorde un canal de carotte (9, 39, 70, 89) qui conduit à l'espace creux de moulage (4, 34, 64) et auquel correspond une garniture (11, 41, 69, 87) qui forme au moins partiellement la paroi du canal de carotte (9, 39, 70, 89), caractérisé par le fait que la garniture (11, 41, 69, 81) est constituée d'un revêtement (11, 41, 69, 87) qui peut s'insérer, à ajustement doux, dans les moitiés (65 ; 66) de l'outil de moulage ou dans les plaques de carotte (7 ; 8, 37 ; 38) qui y sont disposées et peut se démouler avec la carotte, durcie (12, 42, 76).

2. Appareil selon la revendication 1, caractérisé par le fait que le canal (17, 47, 70) d'écoulement à travers le revêtement (11, 41, 69) est conçu pour stabiliser l'écoulement.

3. Appareil selon la revendication 1 ou 2, caractérisé par le fait que le canal (17, 47, 70) d'écoulement à travers le revêtement (11, 41, 69) présente au moins un étranglement (20, 21, 51, 75).

4. Dispositif selon l'une des revendications 1 à 3, caractérisé par le fait que pour le revêtement (11, 41, 69, 87) est prévu un évidement (10, 40, 67, 88) sur lequel sont accordées les caractéristiques géométriques extérieures du revêtement (11, 41, 69, 87) dont le canal d'écoulement (17, 47, 70) qui les traverse présente des caractéristiques géométriques différentes.

5. Appareil selon l'une des revendications 1 à 4, caractérisé par le fait que le revêtement (11, 41, 69, 87) est constitué de rebuts de plastique.

6. Appareil selon l'une des revendications 1 à 5, caractérisé par le fait que l'ouverture de sortie (79) de la tête mélangeuse (61) et l'ouverture d'entrée (72) du revêtement (69) sont équipées d'embouts de centrage (73, 74) qui se correspondent et assurent l'étanchéité.,

7. Appareil selon l'une des revendications 1 à 5, caractérisé par un dispositif automatique (85) d'amenée et d'insertion pour le revêtement (87).

FIG.1

EP 0 313 916 B1

FIG. 2

FIG. 3

FIG.4